# EUROPEAN PATENT APPLICATION

(11) **EP 2 090 550 A1**
(43) Date of publication of application: **19.08.2009**
(21) Application number: 08021697.1
(22) Date of filing: 13.12.2008
(51) Int. Cl.: C03B 37/04, C03C 1/00, C03C 13/06

(54) **Method of making a glass product**

(30) Priority: 10.01.2008 US 8326
(71) Applicant: Johns Manville, Denver CO 80202 (US)
(72) Inventor: Bauer, Jon Frederick, Castle Rock, Colorado 80108 (US)
(74) Representative: Luderschmidt, Schüler & Partner

(57) **Abstract**

A method of making a glass product comprising: providing a feedstock formed from at least one sedimentary rock comprising at least two minerals suitable for making the glass product; melting the feedstock to form a melt; and forming a glass product from the melt.

## Description

### BACKGROUND

In conventional processes for forming a glass product such as glass fibers, a feedstock is prepared by mixing individual, powdered raw materials which include minerals necessary to form the glass product. Such conventional processes of making glass fibers suffer from various drawbacks. For example, since the powdered raw materials for making the feedstock are not available from a single source or supplier and must be obtained from multiple sources and/or suppliers, the preparation of the feedstock can be time consuming, costly and inefficient.

In addition, while the individual raw materials are ground into fine powdered form in order to improve the consistency and quality of the glass fibers, it can be costly to obtain raw materials in powdered form that are of a sufficiently small particle size. Further, once obtained, the individual raw materials in powdered form are thoroughly and intimately mixed in order to increase melt rate and reduce compositional segregation. Ensuring an adequate degree of mixture of the feedstock, however, can be time consuming and difficult. Thus, aspects of the conventional glass-product forming processes are inefficient, time consuming and costly.

Glass fibers have been prepared from igneous rocks such as basalts. These igneous rocks are directly melted to form glass. However, glass fiber preparation from basalts and other igneous rocks have serious drawbacks. For example, basalts and other igneous rocks typically have a relatively high iron content and significant amounts of aluminum. The presence of such iron and aluminum can be undesirable in the manufacture of glass products, as such elements can hinder the melting process of the feedstock. In addition, the continuous filament method of making glass fibers typically requires specific varieties of basalts, which are not always readily available.

### SUMMARY

According to one aspect, a method of making a glass product is provided comprising: providing a feedstock formed from at least one sedimentary rock comprising at least two minerals suitable for making the glass product; melting the feedstock to form a melt; and forming a glass product from the melt.

### DETAILED DESCRIPTION

The present method can be used to make any suitable glass product such as, for example, glass fibers. Glass fibers made from sedimentary rock in accordance with the present method can be used in insulation materials that are resistant to high temperatures, or as fire barrier materials such as, for example, high temperature automotive insulation such as muffler insulation, and building insulation.

The method includes providing a feedstock formed from at least a sedimentary rock comprising at least two minerals for making the glass product. Depending on the contents and proportions of the minerals present in the sedimentary rock, as well as the desired feedstock composition, the feedstock can be formed entirely from the sedimentary rock, or the feedstock can include at least one additional component.

The at least two minerals for making the glass product that are present in the sedimentary rock, are minerals which are suitable for use in the manufacture of a glass product. The minerals for making the glass product can include, for example, minerals which are conventionally used as raw materials and/or additives in a feedstock for forming a glass product. For example, the sedimentary rock can include quartz, clay and/or calcite. The at least two minerals can include compounds such as, for example, silica, calcia, magnesia, alumina, an alkali oxides and an alkaline earth oxide.

The sedimentary rock can contain additional substances that are conventionally added as additives in conventional glass-forming processes. For example, the sedimentary rock can contain sulfur and/or carbon. Such substances can function as redox and/or foam control agents. The use of sedimentary rock in place of individual, powdered raw materials as in conventional glass-forming processes can reduce or eliminate the need to add sulfur and/or carbon to the feedstock.

In an exemplary embodiment, the sedimentary rock contains only a relatively small amount of iron or iron-containing compounds. For example, in exemplary embodiments, the sedimentary rock contains iron in an amount of less than about 6 weight percent, or less than about 4 weight percent. In an exemplary embodiment, the sedimentary rock can be substantially free of iron or iron-containing compounds. Applicant has observed that the presence of iron in a glass product feedstock can adversely affect the melting process, as iron can block heat transfer and encourage the development of thermal gradients. The use of sedimentary rock containing only a relatively small amount of iron or iron-containing compounds can result in a more efficient and thorough melting process.

In an exemplary embodiment, the sedimentary rock can contain glass-forming minerals in amounts and proportions that allow the sedimentary rock to be used as a feedstock without the addition of any raw material additives. When the sedimentary rock contains glass-forming minerals in suitable amounts and proportions, substantially no additional powdered raw materials are added to the sedimentary rock, and the sedimentary rock itself can be used as the feedstock, together with at least one optional fluxing agent. In another exemplary embodiment, at least one raw material additive can be added to the sedimentary rock to form the feedstock, and optional processing agents for facilitating the processing of the feedstock and/or manufacture of the glass product.

In an exemplary embodiment, the at least two minerals present in the sedimentary rock can be in intimate contact with each other, and/or a high degree of mixing of the at least two minerals can exist in the sedimentary rock. For example, the intimate contact and/or high degree of mixing of the at least two minerals can be effective to reduce or eliminate the need for processing the sedimentary rock into smaller grain sizes. The intimate contact and/or high degree of mixing between the at least two minerals can, for example, result in faster melting, a higher level of homogeneity in the melt and/or energy cost savings.

Applicant has observed that it can be difficult or impossible to synthesize a mixture from individual, powdered raw materials as in conventional processes, to the degree of intimate contact/mixture that can exist in the sedimentary rock. For example, a process known as "briquetting" attempts to synthesize a material containing minerals in intimate contact with each other. However, such process is expensive, and typically does not achieve comparable levels of intimate contact/mixture between the minerals.

The at least two minerals can be present in the sedimentary rock in the form of grains, and the minerals can have an average grain size that is sufficiently small to facilitate the melting of the feedstock. For example, the minerals can have an average grain size of less than about 50 micrometers, preferably less than about 10 micrometers, preferably less than about 5 micrometers. The average grain size can be from about 1 to about 50 micrometers, preferably from about 0.1 to about 10 micrometers. By comparison, for example, quartz grain size in sand used in conventional, mixed batch production is generally much larger than quartz available from sedimentary rock.

In an exemplary embodiment, the sedimentary rock can be provided or obtained from any suitable source, for example, in the form of relatively small particles. The small particles can, for example, be of a sufficiently small size so as to not require processing to reduce the size thereof in order to be melted during the melting process. For example, in an exemplary embodiment, the sedimentary rock particles obtained from a suitable source are not subjected to processing for decreasing their particle size, or alternatively are subjected to minimal processing for decreasing their particle size. The absence or mitigation of such size reducing processing of the sedimentary rock particles can reduce the time and cost associated with the preparation of the feedstock. In the event that the sedimentary rock is to be reduced in size, it can be easier, less time consuming, and less costly to process than basalts and other igneous rocks.

The sedimentary rock can be obtained from any suitable source, for example, from a quarrying or mining operation and/or in waste or tailings piles. For example, the sedimentary rock can be quarried for road aggregate. The sedimentary rock can include by-products from mineral mining in both metallic and non-metallic ore deposits. Waste from coal mining operations can also contain suitable sedimentary rock. Since conventional raw materials are individually mined and processed making them relatively expensive, use of the sedimentary rock readily available from the above sources can significantly reduce the cost of glass processing.

The at least one sedimentary rock can include one or more types of rock, and the rock(s) can be selected based on the type and composition of the glass product to be produced. For example, the sedimentary rock can include shale, siltstone, greywacke, calcareous shale and combinations thereof. The shales can be formed from a clay and/or mud and contain, for example, quartz sand, illitic clay, kaolinitic clay, calcite, an iron oxide and an alkali compound. The siltstone can have intermediate grain sizes with grains smaller than, for example, about 62 micrometers. Greywacke can include sedimentary rock that is comparatively richer in quartz than shale. Calcareous shale can include shale that is rich in lime and can have, for example, a silica content as low as 30 weight percent and a calcium oxide content as high as 50 weight percent.

The feedstock can include at least one fluxing agent which facilitates the processing of the sedimentary rock. For example, the fluxing agent can be effective to decrease the melting temperature of the sedimentary rock, decrease the viscosity of the sedimentary rock and/or increase the biosolubility of the sedimentary rock. The specific fluxing agent that is employed can depend on the composition of the feedstock. For example, the fluxing agent can include an alkali oxide and/or boron oxide. In an exemplary embodiment, borax can be used as a fluxing agent, for example, with a sedimentary rock having a relatively low aluminum content.

The feedstock can be heated to a temperature sufficient to form a melt therefrom. Any suitable means for melting the feedstock can be employed. For example, the feedstock can be introduced, preferably continuously, to a glass-melting furnace. In an exemplary embodiment, a high throughput method, such as submerged combustion or melting in an electric melter, can be used to melt the sedimentary rock.

After the feedstock is melted, the resulting melt can be formed into a glass product such as, for example, a plurality of glass fibers. In an exemplary embodiment, the glass product can include glass fibers that have high strength and/or high temperature resistance. Any suitable method of forming glass fibers from molten glass can be utilized. For example, the glass fibers can be produced by spinning, continuous drawing, flame attenuation and/or blowing processes.

In the spinning process of forming glass fibers, the molten glass can be fed through electrically heated bushings or spinnerets having a plurality of fine orifices. The molten glass can be extruded through the orifices into fine filaments. The diameter of the glass filaments can be approximately equal to the diameter of the orifices in the bushings or spinnerets.

In the continuous drawing process of forming glass fibers, the molten glass can be fed through a plurality of holes in electrically heated bushings causing the molten glass to form fine filaments. A high-speed winder catches multiple strands of these fine filaments while revolving at a rate much faster than the flow rate of the molten glass from the bushings. The high-speed winder exerts tension on the fine filaments extruding them into even thinner filaments. The glass filaments or fibers formed by the continuous drawing process can have a diameter much smaller than the diameter of the holes in the bushings.

Flame attenuation refers to a process of forming glass fibers wherein molten glass exits a furnace under the force of gravity to form filaments. These filaments then pass by a flame, such as a high-velocity gas burner flame, which causes them to lengthen and decrease in diameter. Examples of blowing techniques to produce glass fibers are centrifugal-blowing and die-blowing. Centrifugal-blowing refers to a method of making glass fibers wherein molten glass passes through apertures of a rapidly rotating spinner. The glass can then be attenuated by contact with blasts of hot gases, such as steam or combustion gases.

For a better understanding of the present invention, the following examples are given by way of illustration and not by limitation.

### EXAMPLES

Table 1 lists the oxide content of various types of glass made directly from basalts. These types of glass are produced by melting basalts. Table 2 lists the oxide content of various shales, on a dry basis.

A comparison of Table 1 with Table 2 shows that sedimentary rocks such as shales can contain many of the same oxides useful in glass production as those contained in igneous rocks such as basalts. It is also apparent that sedimentary rocks such as shales can contain such useful oxides in comparable amounts and proportions as the useful oxides contained in igneous rocks such as basalts, while maintaining an acceptably low iron content.

**TABLE 1**

| **Oxide** | **Basalt Wool (Fiberex, Canada), wt. %** | **Basalt Wool (PIM, Ukraine), wt. %** | **Continuous Filament Andesitic Basalt (KV, Russia), wt. %** | **Boron-free E glass (OC Advantex), wt. %** |
|---|---|---|---|---|
| SiO₂ | 47.3 | 50.0 | 54.2 | 58.7 |
| Al₂O₃ | 14.5 | 13.9 | 17.8 | 13.6 |
| Fe₂O₃ | | | 9.65 | 0.43 |
| FeO | 5.05 | 12.5 | 5.24 | |
| TiO₂ | 0.8 | 2.7 | 1.15 | 0.07 |
| Na₂O | 2.3 | 2.5 | 2.57 | 1.35 |
| K₂O | 0.8 | 0.8 | 1.64 | 0.04 |
| CaO | 17.6 | 9.1 | 8.14 | 22.6 |
| MgO | 11.3 | 5.8 | 3.91 | 3.19 |
| SrO | 0.03 | 0.01 | 0.036 | |
| BaO | 0.05 | | 0.033 | |
| ZnO | | 0.01 | 0.009 | |
| SO₃ | 0.09 | 0.01 | 0.004 | |
| Cr₂O₃ | 0.02 | 0.01 | 0.004 | |
| MoO₃ | | | | |
| ZrO₂ | 0.01 | | 0.064 | |
| P₂O₅ | 0.03 | 0.01 | 0.160 | |
| MnO | 0.17 | 0.05 | 0.150 | |
| V₂O₅ | | | 0.055 | |

**TAB LE 2**

| **Oxide** | **Exemplary Platform Shale, wt. %** | **Exemplary Continental Margin Shale, wt. %** | **Exemplary Shaley Sandstone (Greywacke), wt. %** |
|---|---|---|---|
| SiO₂ | 57.2 | 63.0 | 69.0 |
| Al₂O₃ | 17.0 | 17.87 | 13.96 |
| Fe₂O₃ | 4.96 | 3.0 | 1.65 |
| FeO | 2.37 | 3.96 | 3.62 |
| TiO₂ | 0.88 | 0.83 | 0.62 |
| Na₂O | 0.90 | 1.71 | 3.0 |
| K₂O | 3.95 | 3.85 | 2.07 |
| CaO | 8.12 | 2.35 | 2.59 |
| MgO | 3.72 | 2.78 | 3.0 |
| SrO | | | |
| BaO | | | |
| ZnO | | | |
| SO₃ | 0.68 | 0.32 | 0.31 |
| Cr₂O₃ | | | |
| MoO₃ | | | |
| ZrO₂ | | | |
| P₂O₅ | 0.11 | 0.17 | 0.10 |
| MnO | 0.09 | 0.10 | 0.10 |
| V₂O₅ | | | |

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the methods and steps described herein.

As one of ordinary skill in the art will readily appreciate from the disclosure of the present invention, processes, machines, manufacture, compositions of matter, means, methods or steps, presently existing or later to be developed that perform substantially the same function or achieve substantially the same result as corresponding embodiments described herein may be utilized according to the present invention. Accordingly, the appended claims are intended to include within their scope such processes, machines, manufacture, compositions or matters, means, methods or steps.

## Claims

1. A method of making a glass product comprising:
providing a feedstock formed from at least one sedimentary rock comprising at least two minerals suitable for making the glass product;
melting the feedstock to form a melt; and
forming a glass product from the melt.

2. The method according to claim 1, wherein the at least two minerals present in the at least one sedimentary rock comprise quartz and clay.

3. The method according to claim 1, wherein the at least two minerals present in the sedimentary rock comprise quartz, clay and calcite.

4. The method according to claim 1, wherein the at least two minerals comprise quartz having an average grain size of less than about 10 micrometers.

5. The method according to claim 1, wherein the at least two minerals comprise quartz having an average grain size of less than about 5 micrometers.

6. The method according to claim 1, wherein the feedstock comprises at least one fluxing agent.

7. The method according to claim 6, wherein the at least one fluxing agent comprises an alkali oxide or boron oxide.

8. The method according to claim 1, wherein the at least one sedimentary rock contains iron in an amount less than about 6 weight percent.

9. The method according to claim 1, wherein the at least one sedimentary rock contains iron in an amount less than about 4 weight percent.

10. The method according to claim 1, wherein the glass product comprises glass fibers.

11. The method according to claim 1, wherein the at least one sedimentary rock is selected from the group consisting of shale, calcareous shale, siltstone, greywacke and a combination thereof.

12. The method according to claim 11, wherein the at least one sedimentary rock comprises shale.

13. The method according to claim 1, wherein the step of melting the feedstock is conducted at a temperature of from about 1400 degrees Celsius to about 1600 degrees Celsius.

14. The method according to claim 1, wherein the average grain size of the at least two minerals present in the at least one sedimentary rock is less than about 10 micrometers.

15. The method according to claim 1, wherein the feedstock consists essentially of the at least one sedimentary rock and at least one optional fluxing agent.

16. The method according to claim 1, wherein the sedimentary rock obtained from a sedimentary rock source is not further processed to minimize particle size, prior to the step of melting the feedstock.
